# EUROPEAN PATENT SPECIFICATION

(11) **EP 1 568 741 B1**
(45) Date of publication and mention of the grant of the patent: **20.06.2007**
(21) Application number: 05450029.3
(22) Date of filing: 15.02.2005
(51) Int. Cl.: C09D 5/08

(54) **Method of improving the performance of organic coatings for corrosion resistance**
Verfahren zur Verbesserung der Leistung von organischen Beschichtungen für Korrosionsbeständigkeit
Procédé d'amélioration de la résistance à la corrosion des revêtements organiques

(30) Priority: 25.02.2004 US 786340
(43) Date of publication of application: 31.08.2005
(73) Proprietor: Posco, Pohang-shi, Kyungsangbuk-do 790-300 (KR); VIRGINIA TECH INTELLECTUAL PROPERTIES, INC., Blacksburg, VA 24060 (US)
(72) Inventor: Hyung-Joon, Kim, Pohang-city, Kyungsangbuk-do 790-785 (KR); Jinming, Zhang, c/o Virginia Tech, Blacksburg, VA 24060 (US); Gandour, Richard D., c/o Virginia Tech, Blacksburg, VA 24061 (US); Yoon, Roe-Hoan, c/o Virginia Tech, Blacksburg, VA 24060 (US)
(74) Representative: Schwarz, Albin

(56) References cited:
- EP-A- 0 878 519
- GB-A- 1 572 210

## Description

### FIELD OF THE INVENTION

This invention applies to polymeric resins that are used to coat metallic substrates for corrosion protection, and to a method of modifying the resins with organosulfur compounds for improved corrosion resistance. In particular, the invention pertains to preparing a homogeneous mixture of the resin and the organosulfur compound.

### BACKGROUND OF THE INVENTION

Metals that are exposed to the ambient for prolonged periods of time require coatings to protect the exposed surface from corrosion. Steel producers use various organic and inorganic coatings to protect cold-rolled steel (CRS) sheets from corrosion during shipment and storage. The common practice in providing temporary corrosion protection for steel sheets is to apply a conversion coating. Traditionally, conversion coatings are produced by exposing untreated or galvanized CRS sheets to phosphoric acid or chromic acid treatment or both. The latter provides the most effective corrosion protection. However, increased environmental and safety concerns on the use of chrome have generated strong interest in developing chrome-free conversion coatings. Most of the new developments are based on replacing chromation with organic coatings.

It is well known that coating steel with a resin solution containing an organosilane coupling agent provides corrosion protection. Woo, et al. (U.S. patent No. 5,077,354) disclosed a method of mixing a silicon resin with ethylenically unsaturated monomers in a solvent, heating the solution to 50-150°C, and agitating the solution until polymerization is complete. According to van Ooij (U.S. patent No. 5,455,080), this method suffers from the weak bonding between the paint and steel substrate. The reason is that silicone resin has already been reacted with the ethylenic monomers when forming the acrylic polymer, which in turn prevents the silicon resin from acting as a coupling agent between the outer acrylic layer and the steel substrate.

Van Ooij, et al. (U.S. patents 5,455,080; 5,498,481; 5,539,031) disclosed methods of coating CRS or electrogalvanized (EG) steel with a blended powder mixture comprising a thermosetting resin, a pigment and non-hydrolyzed organosilane coupling agent. The mixture contains 0.01-10% by weight of an organosilane whose melting temperature is lower than the curing temperature of the resin. It is believed that organosilanes can diffuse toward a metal surface and form a crosslinked layer during curing step.

Purnel, et al. (U.S. patent 5,389,405) and Morris, et al. (U.S. patent 5,412,011) disclosed chromium-free conversion coatings for metal surfaces such as aluminum, steel, and galvanized steel, which are applied on the surfaces as aqueous solutions of anionic polyacrylamide copolymer, inorganic silicate, and organofunctional silane.

There have been a few attempts to incorporate surfactants into polymer or other coatings to increase corrosion resistance. Sankaranaryanan and Subbaiyan (1993) added 1g/l octadecyl dithiocarbamate (C₁₈H₃₇NHCSSH) to a phosphating bath to improve the corrosion resistance of phosphated steel. Van Alsten (1999) added 1,000 ppm of an alkyl bis-phosphonic acid and zinc acetate to an ethylene and methacrylic acid copolymer. The mixture is melt-pressed onto CRS panels to form a film of approximately 2 mm in thickness. The film was subsequently cured in a vacuum oven at 150°C to allow for the surfactant (i.e., octadecyl dithiocarbamate) to form self-assembled monolayers (SAMs). Although the process of forming SAMs from a rather thick polymer melt was sluggish, using alkyl bis-phosphonic acid and zinc acetate as additives to polymeric resin improved the coating properties after several minutes of annealing time.

Shimakura, et al. (EP 1,002,889) disclosed an anticorrosive coating composition, comprising a silane coupling agent and an aqueous resin solution (or suspension). Additionally, phosphorus-containing ions and/or sulfur-containing compounds can be added to the coating solution. The sulfur-containing compounds disclosed in this invention may be selected from the groups consisting of thio-carbonyls, triazine thiols, sulfide ions, and persulfate ions.

Kanai and Shimakura (U.S. patent 6,607,587) disclosed an anticorrosive coating for metals, which comprises a resin, water, water-dispersible silica, and a thiocarbonyl compound.

Organosulfur compounds have a strong affinity for metal substrates and can form close packed SAMs on the surface. There have been attempts to use this SAMs to produce a corrosion-resistant coating (Jenning, 1996; Nozawa, 1997; Aramaki, 1999; Taneichi, 2001). The invention described herein uses sulfur-containing organic compounds to modify resin solutions for forming a durable coating with enhanced corrosion resistance.

### SUMMARY OF THE INVENTION

The instant invention describes a method of improving the performance of organic conversion coatings for metals by modifying the compositions of the organic resins by adding an organosulfur compounds. The improved performance of the modified resin compositions can protect metal substrates from corrosion without chromation. Several possible mechanisms may operate to enhance the properties of the coating:
i) The sulfur-containing surfactants disclosed in the instant invention chemisorb on the surfaces of the metallic substrates, and give rise to improved adhesion of the organic resins on the substrates.
ii) The surface free energies of the metallic substrates are reduced and, therefore, render the substrates less susceptible to corrosion.
iii) The small organosulfur compounds as compared to the molecules of the resins can readily fill the pores of polymer matrix, thereby increasing the barrier effect for corrosion protection.
iv) The organosulfur compounds of the invention may be more readily oxidized than the substrates, thereby serving as anti-oxidants.

The aforesaid organic resins to be used in the instant invention may be chosen from, but not limited to, acrylic, acrylic-urethane, epoxy, polyester, epoxy-polyester or fluorovinyl polymers. The resins may be a single resin or a combination of several resins that are designed to coat metal substrates for the purpose of corrosion protection.

The aforesaid organosulfur compounds that can be used as modifiers of the organic resins are alkanethiols having the general formula R(CH₂)ₙSH, where R is a terminal group selected from the group consisting of H-, NH₂-, HOOC-, and HO-, and n represents the number of hydrocarbons, which can range from 10 to 21.

Bifunctional compounds with two terminal groups, one sulfur-containing and the other a non-sulfur containing polar group, can serve as modifiers, provided that both groups are compatible with the afore said organic resins.

A distinguishing feature of the instant invention is the simplicity in coating a metal surface with the modified-resins. There are no needs to add additional steps or equipment. A mixture of the resin and organosulfur compounds can be directly applied to a metal surface by any means that is usually employed for the original resin. Also, there are no needs to modify the procedures or equipment involved in curing the coated surface. In fact, the process as disclosed in the instant invention simplifies the process by eliminating the chromation step.

The aforesaid modified resin can contain 0.001-0.5 moles per liter (M) of organosulfur compounds, preferably in the range of 0.02-0.05 M. This concentration may be used for electrogalvanized steel. For other metals, the optimal concentrations may differ slightly.

The modified-resins can be applied to metal surfaces by a roll or a bar coater and be cured at a temperature in the range of 100-350°C The coating thickness may be controlled according to the needs. For galvanized steels, coating thickness in the range of 1-2 µm may be sufficient as conversion coatings for cold-rolled steels.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The accompanying drawings, which are incorporated in and constitute a part of the specification, illustrate an embodiment of the invention, and, together with the description, serve to explain the principles of the invention:
Figure 1 shows the photographs of the EG steel panels after 250 hours of salt spray tests. The unprotected panel showed red rust, while the EG steel coated with unmodified resin shows white rust. The panel coated with a resin containing 1-octadecanthiol (ODT) shows no sign of rust.
Figure 2 is a schematic illustration of a metal substrate coated with a resin that has been modified with an organosulfur compound. The triangles, squares and circles represent the components of the polymer. The rods represent the organosulfur modifier.
Figure 3 shows the hotographs of the EG steel panels after 144 hours of salt spray tests. The unprotected EG steel showed red rust, while the panel coated with unmodified resin shows signs of corrosion. The EG steel coated with a resin containing 16-mercaptohexadecanoic acid (MCA) shows no sign of corrosion.
Figure 4 shows the photographs of the EG steel panels after 168 hours of salt spray tests. The panels were coated with i) resin alone, ii) resin mixed with ODT dissolved in ethanol, iii) resin mixed with ODT dissolved in 1-butanol, and iv) resin mixed with ODT in 1:1 blend of ethanol and 1-butanol. All ODT solutions were at 0.1 M, and the resin and ODT solutions were blended at 70:30 ratio by volume.

### DETAILED DESCRIPTION OF THE PREFERRED EMBODIMENTS

A preferred embodiment of the present invention will hereinafter be described in detail with reference to the accompanying drawings.

According to a preferred embodiment of the instant invention, four steps are involved to coat a metal substrate with the aforesaid modified resin. First, a solution of organosulfur compound is prepared with a proper solvent. A separate resin solution is also prepared according to the prescribed procedure for a particular resin. Second, the solution of the organosulfur compound is mixed with the resin solution at an optimal ratio. Third, the mixed solution is then applied to a metal surface by means of a suitable coating technique, for example, rolling, dipping, brushing, and spraying. Fourth, the coating is cured at an appropriate temperature to solidify the film on the metal substrate. As an alternative to steps one and two above, the organosulfur compound may be directly dissolved into the resin solution.

The organosulfur compounds that can be used for modifying resins are alkanethiols having the general formula R(CH₂)ₙ SH, where R is a terminal group selected from the group consisting of H-, NH₂-, HOOC-, and HO-, and n represents the number of hydrocarbons, which can range from 10 to 21. Bifunctional compounds with two terminal groups, one sulfur-containing and the other non-sulfur containing polar group, can serve as modifiers, provided that both groups are compatible with the resin.

It should be understood that a proper solvent has to be chosen to make the solution of organosulfur compound compatible with the resin solution. The compatibility may mean that both solutions are miscible when mixed together, and a mixture of both solutions can produce a satisfactory coating without defects. A proper solvent should be chosen so that the aforesaid resin-organosulfur mixture can remain stable for a desired period of time and also have a suitable fluidity. Of course, the solvents should be environmentally acceptable and have a pleasant odor. The preferred solvents include, but are not necessarily limited to, alcohols, acetone, turpentine, benzene, ethyl and butyl acetate, toluene, petroleum ester, xylene, alkane, mineral spirit, and water. The particularly preferred solvents of the present invention are ethanol, 1-propanol, 1-butanol, or their mixture.

Another critical aspect of the invention is the mixing ratio between the solutions of the resin and the modifier. The mixing ratio controls the concentration of modifier in the resin-organosulfur mixture. In a preferred embodiment, the concentration of the modifier in the mixture can be in the range of 0.001-0.5 M, preferably in the range of 0.02-0.05 M.

Another feature of the instant invention is that the modifiers can be added to a paint, which is a blended resin mixture containing one or more additional additives such as a pigment and a filler.

The modified resin of the invention can provide corrosion resistance in a variety of metal substrates including, but not limited to, hot rolled and pickled steel sheet, CRS sheets, stainless steel sheet, hot-dipped metallic coated steel sheets, electroplated metallic coated steel sheets, aluminum sheets and aluminum alloy sheets, zinc sheets, zinc alloy sheets, copper sheets, copper alloy sheets, gold, and silver. The metallic coating may include one or more layers of lead, lead alloy, nickel, nickel alloy, zinc, zinc layer, tin, tin alloy, and the like. A phosphate conversion coating may also be applied to these steel sheets prior to being coated with the resin-organosulfur mixture. The metal substrates may include continuous strip and foil, sheets cut to lengths as well as bars, angles, tubes and beams.

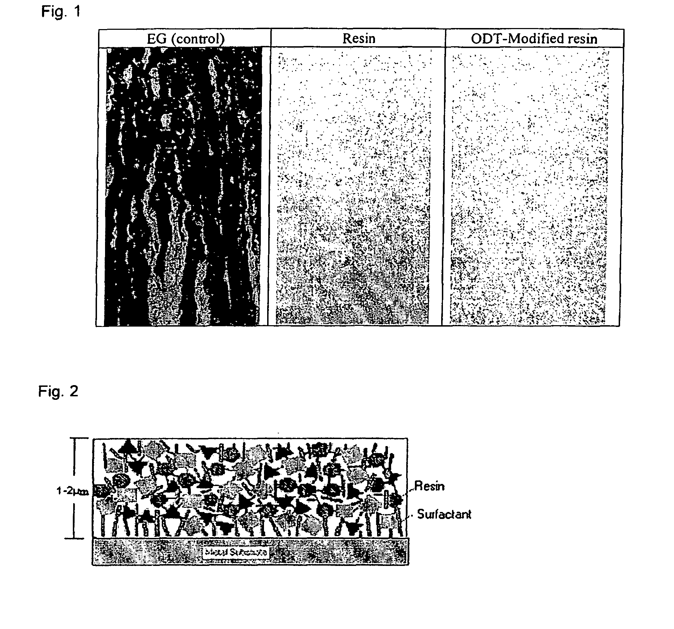

As depicted in Fig. 2, the organosulfur modifier may chemically bind with metal surface and, therefore, enhance the adhesion between the coating and substrate, giving an improved resistance to chemical attack, mechanical stress and weathering. The small organosulfur molecules may also fill the pores present in the matrix of resin and help reduce the diffusion rate of corrosive media such as water, oxygen and ions to metal surface. Another effect of the additives is that organosulfur molecules can orient over the topmost surface of the resin coating where the terminal groups of the surfactant may protrude. The orientation of organosulfur molecules over the topmost surface may be such that the coating has a lower surface free energy and act as the first protection against attack by corrosive media. The organosulfur compounds may also serve as anti-oxidants. The modified resin coating can significantly improve corrosion resistance when compared with pure resin coatings because of synergistic effects between the organosulfur compounds and the cured resin.

The organosulfur compound used as a modifier of a resin to form a protective coating on the metal surface comprises an alkanethiol having the general formula R(CH₂)ₙSH, where R is a terminal group selected from the group consisting of H-, NH₂-, HOOC-, HO-. The number n represents the length of hydrocarbon chain, which can range from 10 to 21, and is most preferably 10 and 18. A particularly preferred embodiment of the present invention is 1-octadecanethiol (ODT, CH₃(CH₂)₁₇SH). Details of a blended resin-organosulfur mixture of the invention will be better understood from the following examples.

### Example 1

A 0.1-M ODT solution was prepared in ethanol. The resin solution was prepared by mixing 99 parts of polymer solution and 1 part of inorganic hardener solution, both of which were provided by a chemical company. The ODT solution and resin solution were subsequently mixed together in the ratio of 30:70 by volume. The resultant mixture solution was applied to a test panel of 12 × 7.5 cm by means of a No. 5 bar coater. The panel was an electrogalvanized (EG) CRS sheet from Pohang Iron and Steel Company (POSCO). The coated panel was then cured in an oven at a temperature of 150°C for 5 minutes. As a result, a uniform, lightly gray-colored coating was formed on the steel panel with thicknesses in the range of 1-2 µm. For comparison, another EG steel panel was coated with the aforesaid resin solution without ODT. The test panels coated with the resins with and without ODT were subjected to salt spray test (SST) by following the test procedures of ASMT B117. Also subjected to SST was another EG steel panel without any treatment (control).

Figure 1 shows the photographs of the three test panels after 250 hours of salt spray tests. White rusts appeared on the surface of the control panel after 2-4 hours, while the resin coated panel showed white rusts after 48-72 hours. In contrast, the EG steel panels that had been coated with ODT-modified resin remained rust free after 250 hours of SST. The water beads present in the surface indicate that the surface was still hydrophobic and still remained resistant to the attack of salt fogs. This example demonstrated that the corrosion resistance of resin coating on EG steel sheets can be improved by at least three times with the addition of ODT.

### Example 2

This example illustrates the optimization of the concentration of ODT as a modifier in the resin. The coatings of ODT-modified resins were prepared in the same manner as described in Example 1, but the mixing ratio between resin solution and ODT solution (0.1 M in ethanol) was varied in the range of 90:10 to 40:60 by volume. The EG steel panels coated with the ODT-modified resins were subjected to salt spray tests.

For comparison, two other EG steel panels were also subjected to salt spray tests. One was without any treatment, and the other was coated with the unmodified resin. Still another panel was treated with chromate rinsing prior to coating it with the unmodified resin.

The results of the salt spray tests are given in Table 1. As shown, even a small amount of ODT added to the resin increased corrosion resistance considerably. As the ODT dosage was increased, the corrosion resistance was further increased. At very high dosages of ODT, the resistance decreased. It appears that the optimal mixing ratio between the resin solution and 0.1 M ODT solution lies in the range of 70:30 and 60:40 by volume. Under the optimal conditions, the EG steel coated with ODT-modified resin were superior to the chrome-rinsed EG steel that had been coated with unmodified resin.

**Table 1**

| The Results of the Salt Spray Tests Conducted on the EG Steel Panels Treated with Resins Containing Varying Amounts of 0.1 M ODT-in-Ethanol Solution | | | | | |
|---|---|---|---|---|---|
| Test Panels and Treatment | Composition of Mixture | | Initiation of White Rust in SST (hours) | Surface Free Energy (mJ/m²) | Ranking |
| | Resin Solution (vol. %) | ODT Conc. (M) | | | |
| EG | -- | -- | 2-4 | 45.25 | 9 |
| EG+Resin | 100 | 0 | 48-72 | 44.99 | 8 |
| EG+Resin/ODT (90:10) | 90 | 0.01 | 72-96 | 44.03 | 7 |
| EG+Resin/ODT (80:20) | 80 | 0.02 | 168-192 | 42.53 | 5 |
| EG+Resin/ODT (70:30) | 70 | 0.03 | 264-288 | 39.93 | 1 |
| EG+Resin/ODT (60:40) | 60 | 0.04 | 264-288 | 38.13 | 2 |
| EG+Resin/ODT (50:50) | 50 | 0.05 | 216-240 | 42.04 | 4 |
| EG+Resin/ODT (40:60) | 40 | 0.06 | 144-168 | 41.77 | 6 |
| EG+Chrome+Resin | -- | -- | 240-264 | 42.89 | 3 |

Also shown in Table 1 are surface free energies of the test panels. Interestingly, the corrosion resistance was maximum when the surface free energy of the coated surface was minimum. Thus, the improvement of corrosion resistance may be partially attributed to the decrease of surface free energy of the coating.

Table 2 shows the results of the Tafel studies conducted on the test panels coated with modified resins. As shown, the density of the corrosion current reaches a minimum at the optimal mixing ratios and, hence, at the maximum corrosion resistance. Thus, there was a clear correspondence between the results of the Tafel studies and the salt spray tests.

**Table 2**

| Corrosion Currents of the EG Steel Panels Coated at Different Mixing Ratios between Resin and 0.1 M ODT-in-Ethanol Solutions | | |
|---|---|---|
| Treatment | Corrosion Current Density (µA/cm²) | |
| | Before Soaking in 1 M NaCl solution | After Soaking in 1 M NaCl solution for 100 hours |
| EG+Resin | 4.21 | 21.03 |
| EG+Resin/ODT(90:10) | 0.09 | 18.98 |
| EG+Resin/ODT(80:20) | 0.08 | 8.22 |
| EG+Resin/ODT(70:30) | 0.002 | 4.85 |
| EG+Resin/ODT(60:40) | 0.003 | 6.02 |
| EG+Resin/ODT(50:50) | 0.02 | 8.70 |
| EG+Resin/ODT(40:60) | 2.28 | 12.72 |

### Example 3

In this example, a 16-mercaptohexadecenoic acid (MCA, HS(CH₂)₁₅COOH) was used instead of ODT as a resin modifier. This reagent was different from ODT in that it was a bi-functional sulfur-containing compound. A 0.025 M MCA solution was prepared with ethanol and then mixed with the resin solution at a ratio of 1:1 by volume, which was not necessarily the optimal mixing ratio. At this ratio, the resin-organosulfur mixture contained 0.0125 M MCA. The modified resin was used to coat an EG steel panel with a No. 5 bar coater. The coated panel was cured at 150□ for 5 minutes. Under this condition, the coating thickness would be approximately 1-2 µm. The EG steel panel coated with the modified resin was subjected to salt spray test. For comparison, salt spray tests were also conducted on an uncoated EG steel panel and an EG steel panel that had been coated with the unmodified resin.

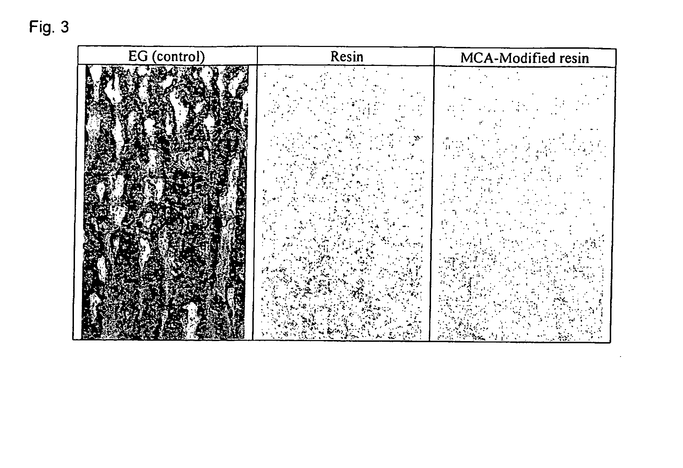

After 144 hours of salt spray tests, the untreated EG steel panel showed red rusts, while the panel coated with unmodified resin showed white rusts. On the other hand, the EG steel panel coated with the resin modified with MCA exhibited no sign of corrosion, as shown in Figure 3.

### Example 4

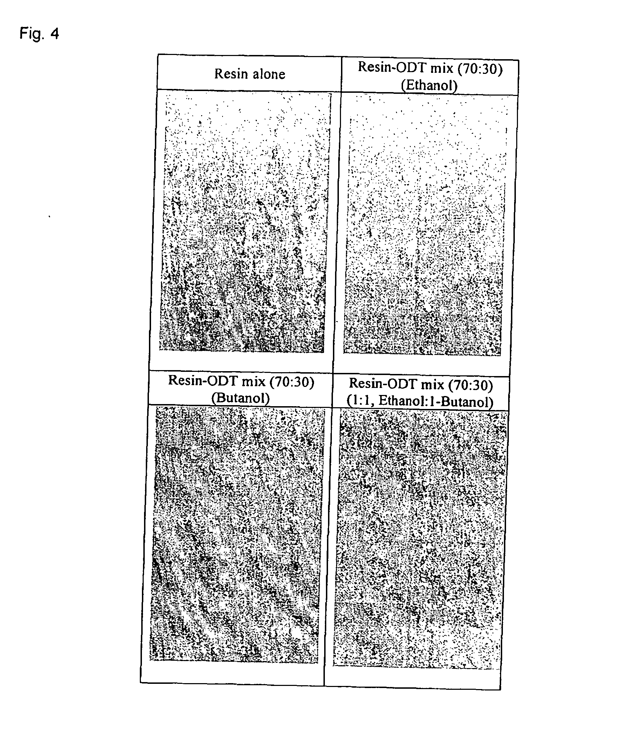

In this example, ODT was dissolved in different solvents and mixed with the resin solution. The resin-ODT mixtures were used to coat EG steel panels, which were subsequently subjected to salt spray tests. The photographs of Figure 4 were taken after 168 hours of the salt spray test for the EG steel panels coated with the following:
i) resin alone,
ii) resin-ODT mix (70:30) with 0.1 M ODT-in-ethanol solution,
iii) resin-ODT mix (70:30) with 0.1 M ODT-in-1-butanol solution;
iv) resin-ODT mix (70:30) with 1:1 mixture of 0.1 M ODT-in-ethanol and 0.1 M ODT-in-1-butanol solution.

As shown in Figure 4, ODT-modified resin greatly increased the corrosion resistance of the EG steel. Both ethanol and 1-butanol served as satisfactory solvents for ODT. The resin-ODT mixtures exhibited low viscosities, but they were not very stable when ethanol was used as the solvent for ODT. 1-butanol was a better solvent for ODT and, hence, the resin-ODT mixture was more stable. However, the resin-ODT mixtures prepared with 1-butanol tended to be more viscose than the case of using ethanol as solvent. As a compromise, a blend of ethanol and 1-butanol provided stable resin-ODT mixtures with low viscosities. Other solvents may be used as solvents for ODT. It should also be noted here that when shorter-chain thiols are be used as resin modifiers, solvents of higher dielectric constants, including water, may be used.

## Claims

1. A method for improving the performance of organic conversion coatings, whose primary ingredients are polymeric resins, comprising the steps of
a. mixing an organosulfur compound with a polymeric resin,
b. coating a metallic substrate with the mixture of said polymeric resin and said organosulfur compound, and
c. curing the metallic substrate coated with said mixture, thereby increasing the corrosion resistance of said metallic substrate without using chrome
wherein said organosulfur compound is an alkanethiol having general formula R(CH₂)ₙSH, where R is a terminal group selected from the group consisting of H-, NH₂-, HOOC-, and HO-, and n represents the number of hydrocarbons, which can range from 10 to 21.

2. The method according to claim 1, wherein said organosulfur compound is 1-octadecanethiol.

3. The method according to claim 1, wherein said polymeric resins are selected from the group consisting of acrylic, acrylic-urethane, epoxy, polyester, epoxy-polyester, fluorovinyl polymers and combinations thereof.

4. The method according to claim 1, wherein said metallic substrate is electrogalvanized steel.

5. The method according to claim 1, wherein step (a) comprises dissolving said organosulfur compound in a solvent and mixing the solution in which said organosulfur compound is dissolved with a solution in which said polymeric resins are dissolved.

6. The method according to claim 5, wherein said metallic substrate is selected from the group consisting of hot rolled and pickled steel sheets, cold-rolled steel sheets, stainless steel sheets, hot-dipped metallic coated steel sheets, electroplated metallic coated steel sheets, aluminum sheets and aluminum alloy sheets, zinc sheets, zinc alloy sheets, copper sheets, copper alloy sheets, gold, and silver.

7. The method according to claim 5, wherein said metallic substrate includes coatings of one or more layers selected from the group consisting of lead, lead alloy, nickel, nickel alloy, zinc, zinc layer, tin, and tin alloy.

8. The method according to claim 5, wherein said solvent for said organosulfur compound is selected from the group consisting of alcohols, acetone, turpentine, benzene, ethyl and butyl acetate, toluene, petroleum ester, xylene, alkane, mineral spirit, and water.

9. The method according to claim 8, wherein said solvent is selected from the group consisting of ethanol, 1-propanol, 1-butanol, and mixtures thereof.

10. The method according to claim 5, wherein the concentration of said organosulfur compound in said polymeric resins is in the range of 0.001-0.5 moles per liter.

11. The method according to claim 5, wherein said metallic substrate is coated with said mixture of the solutions containing said organosulfur compound and said polymeric resins by means of a roll or a bar coater, cured at a temperature in the range of 100 to 350°C to obtain a desired coating thickness.

## Patentansprüche

1. Verfahren zum Verbessern der Leistung organischer Konversionsschichten, deren Hauptbestandteile polymere Harze sind, umfassend die folgenden Schritte:
a. das Vermischen einer Organoschwefelverbindung mit einem Polymerharz,
b. das Beschichten eines Metallsubstrats mit der Mischung aus dem Polymerharz und der Organoschwefelverbindung, und
c. das Härten des mit dieser Mischung beschichteten Metallsubstrats, wodurch die Korrosionsbeständigkeit des Metallsubstrats ohne Verwendung von Chrom erhöht wird, wobei die Organoschwefelverbindung ein Alkanthiol mit der allgemeinen Formel R(CH₂)ₙSH ist, wobei R eine endständige Gruppe, ausgewählt aus der Gruppe, bestehend aus H-, NH₂-, HOOC- und HO-, ist und n die Zahl der Kohlenwasserstoffe darstellt, welche von 10 bis 21 reichen kann.

2. Verfahren gemäß Anspruch 1, wobei es sich bei der Organoschwefelverbindung um 1-Octadecanthiol handelt.

3. Verfahren gemäß Anspruch 1, wobei die polymeren Harze ausgewählt sind aus der Gruppe, bestehend aus Acryl-, Acrylurethan-, Epoxid-, Polyester-, Epoxypolyester-, Fluorvinylpolymeren und Kombinationen davon.

4. Verfahren gemäß Anspruch 1, wobei das Metallsubstrat galvanisch verzinkter Stahl ist.

5. Verfahren gemäß Anspruch 1, wobei der Schritt (a) das Auflösen der Organoschwefelverbindung in einem Lösungsmittel und das Vermischen der Lösung, in der die Organoschwefelverbindung gelöst ist, mit einer Lösung, in der die polymeren Harze gelöst sind, umfasst.

6. Verfahren gemäß Anspruch 5, wobei das Metallsubstrat ausgewählt ist aus der Gruppe, bestehend aus warmgewalzten und gebeizten Stahlblechen, kaltgewalzten Stahlblechen, Edelstahlblechen, mit Tauchüberzug metallisch beschichteten Stahlblechen, galvanisierten metallisch beschichteten Stahlblechen, Aluminiumblechen und Aluminiumlegierungsblechen, Zinkblechen, Zinklegierungsblechen, Kupferblechen, Kupferlegierungsblechen, Gold und Silber.

7. Verfahren gemäß Anspruch 5, wobei das Metallsubstrat Beschichtungen aus einer oder mehreren Lagen, ausgewählt aus der Gruppe, bestehend aus Blei, Bleilegierung, Nickel, Nickellegierung, Zink, Zinkschicht, Zinn und Zinnlegierung, umfasst.

8. Verfahren gemäß Anspruch 5, wobei das Lösungsmittel für die Organoschwefelverbindung ausgewählt ist aus der Gruppe, bestehend aus Alkoholen, Aceton, Terpentin, Benzol, Ethyl- und Butylacetat, Toluol, Petrolester, Xylol, Alkan, Lösungsbenzin und Wasser.

9. Verfahren gemäß Anspruch 8, wobei das Lösungsmittel ausgewählt ist aus der Gruppe, bestehend aus Ethanol, 1-Propanol, 1-Butanol und Mischungen davon.

10. Verfahren gemäß Anspruch 5, wobei die Konzentration der Organoschwefelverbindung in den polymeren Harzen im Bereich von 0,001-0,5 Mol pro Liter liegt.

11. Verfahren gemäß Anspruch 5, wobei das Metallsubstrat mittels einer Walze oder einer Streichmaschine mit dem Gemisch der Lösungen, welche die Organoschwefelverbindung und die polymeren Harze enthalten, beschichtet wird und bei einer Temperatur im Bereich von 100 bis 350°C gehärtet wird, um eine gewünschte Schichtdicke zu erhalten.

## Revendications

1. Procédé pour améliorer la performance de revêtements de conversion organique, dont les ingrédients primaires sont des résines polymères, comprenant les étapes de :
a. mélanger un composé organosoufré avec une résine polymère,
b. revêtir un substrat .métallique avec le mélange de ladite résine polymère et dudit composé organosoufré, et
c. traiter le substrat métallique revêtu avec ledit mélange, accroissant ainsi la résistance à la corrosion dudit substrat métallique sans utiliser de chrome,
dans lequel ledit composé organosoufré est un alcanethiol ayant une formule générale R(CH₂)ₙSH, dans laquelle R est un groupement terminal choisi parmi le groupe consistant en H-, NH₂- , HOOC-, et HO-, et n représente le nombre d'hydrocarbures, qui peut varier de 10 à 21.

2. Procédé selon la revendication 1, dans lequel ledit composé organosoufré est le 1-octadécanethiol.

3. Procédé selon la revendication 1, dans lequel lesdites résines polymères sont choisies parmi le groupe consistant en des polymères acryliques, acrylique-uréthane, époxy, polyester, époxy-polyester, fluorovinyliques et des combinaisons de ceux-ci.

4. Procédé selon la revendication 1, dans lequel ledit substrat métallique est de l'acier électro-zingué.

5. Procédé selon la revendication 1, dans lequel l'étape (a) comprend la dissolution dudit composé organosoufré dans un solvant et le mélange de la solution dans laquelle ledit composé organosoufré est dissous avec une solution dans laquelle lesdites résines polymères sont dissoutes.

6. Procédé selon la revendication 5, dans lequel ledit substrat métallique est choisi parmi le groupe consistant en des feuilles d'acier laminées à chaud et décapées, des feuilles d'acier laminées à froid, des feuilles d'acier inoxydable, des feuilles d'acier revêtues de métal par immersion à chaud, des feuilles d'acier revêtues de métal par dépôt électrolytique, des feuilles d'aluminium et des feuilles d'alliages d'aluminium, des feuilles de zinc, des feuilles d'alliages de zinc, des feuilles de cuivre, des feuilles d'alliages de cuivre, de l'or, et de l'argent.

7. Procédé selon la revendication 5, dans lequel ledit substrat métallique inclut des revêtements d'une ou plusieurs couches choisies parmi le groupe consistant en du plomb, un alliage de plomb, du nickel, un alliage de nickel, du zinc, une couche de zinc, de l'étain, et un alliage d'étain.

8. Procédé selon la revendication 5, dans lequel ledit solvant pour ledit composé organosoufré est choisi parmi le groupe consistant en des alcools, l'acétone, la térébenthine, le benzène, l'acétate d'éthyle et de butyle, le toluène, un ester de pétrole, un xylène, un alcane, une essence minérale, et l'eau.

9. Procédé selon la revendication 8, dans lequel ledit solvant est choisi parmi le groupe consistant en l'éthanol, le 1-propanol, le 1-butanol, et des mélanges de ceux-ci.

10. Procédé selon la revendication 5, dans lequel la concentration dudit composé organosoufré dans lesdites résines polymères est dans la gamme de 0,001 à 0,5 moles par litre.

11. Procédé selon la revendication 5, dans lequel ledit substrat métallique est revêtu avec ledit mélange des solutions contenant ledit composé organosoufré et lesdites résines polymères au moyen d'un rouleau ou d'un enducteur à barre, traité à une température dans la gamme de 100 à 350°C pour obtenir une épaisseur de revêtement désirée.
